# EUROPÄISCHE PATENTSCHRIFT

(11) **EP 2 477 951 B1**
(45) Veröffentlichungstag und Bekanntmachung des Hinweises auf die Patenterteilung: **23.01.2019**
(21) Anmeldenummer: 09744597.7
(22) Anmeldetag: 18.09.2009
(51) Int. Cl.: C02F 1/467, C02F 1/461, C02F 1/00

(54) **VORRICHTUNG ZUR WASSERENTKEIMUNG DURCH ANODISCHE OXIDATION**
DEVICE FOR DISINFECTING WATER BY MEANS OF ANODIC OXIDATION
DISPOSITIF DE STÉRILISATION D'EAU PAR OXYDATION ANODIQUE

(43) Veröffentlichungstag der Anmeldung: 25.07.2012
(73) Patentinhaber: AUTARCON GMBH, 34117 Kassel (DE)
(72) Erfinder: GOLDMAIER, Martin, Alexander, 34121 Kassel (DE)
(74) Vertreter: Fabry, Bernd
(86) Internationale Anmeldenummer: PCT/DE2009/001313
(87) Internationale Veröffentlichungsnummer: WO 2011/032527

(56) Entgegenhaltungen:
- DE-A1- 2 935 124
- DE-U1- 29 709 241
- US-A- 4 767 511
- US-A1- 2002 070 107
- US-A1- 2006 283 808

## Beschreibung

Die Erfindung betrifft eine Vorrichtung zur Wasserentkeimung durch anodische Oxidation. Die anodische Oxidation erfolgt durch eine sogenannte Elektrolysezelle, die sich als ein Paket von Plattenelektroden darstellt, wobei eine solche Elektrolysezelle im Handel z. B. über die Firma G.E.R.U.S. käuflich erhältlich ist. Durch einen solchen anodischen Oxidationsreaktor in Form einer Elektrolysezelle erfolgt die Herstellung von freiem Chlor aus dem im Wasser gelösten NaCL, wodurch hypochlorische Säure gebildet wird, welche das Wasser desinfiziert. Die Technik ist insofern bekannt und braucht an dieser Stelle nicht näher erläutert zu werden.

Weiterhin ist ein sogenannter Redoxsensor bekannt. Durch einen Redoxsensor wird das Redoxpotential bestimmt, also eine Spannung, wobei in Abhängigkeit von der Höhe der gemessenen Spannung Aussagen über die Wasserqualität im Hinblick auf die Bakterienbelastung getroffen werden können. Eine unmittelbare Aussage über den Chlorgehalt des Wassers in Abhängigkeit von der gemessenen Spannung ist nicht möglich, da die Spannung ebenfalls noch durch den pH-Wert und die Temperatur des Wassers beeinflusst wird. Allerdings gibt es Tabellen, aus denen ersichtlich wird, wenn bei einer gewissen Spannung von guter auch schlechter Wasserqualität auszugehen ist. Das heißt, das Redoxpotenzial erlaubt eine Aussage über das Desinfektionsvermögen des Wassers. Dieses Redoxpotenzial ist ein sehr schwaches und damit störanfälliges Signal.
Wie bereits an anderer Stelle erläutert, ist die Wasserentkeimung durch anodische Oxidation durchaus bekannt. Bekannt ist in diesem Zusammenhang eine Vorrichtung zur Wasserentkeimung, die zwei Wasserkreisläufe umfasst. In dem einen Wasserkreislauf erfolgt die Chlorierung des Wassers durch anodische Oxidation, wobei in einem zweiten, hiervon im Wesentlichen getrennten Wasserkreislauf die Zuführung des chlorierten Wassers in einen Vorratsbehälter vorgenommen wird. Hieraus folgt, dass der Redoxsensor in keiner Weise mit dem Reaktor zur anodischen Oxidation in Verbindung steht. Der Leitungsaufwand einer Vorrichtung nach dem Stand der Technik ist erheblich. Wasserentkeimungsanlagen werden insbesondere in Entwicklungsländern benötigt, weshalb man darauf bedacht ist, solche Wasserentkeimungsanlagen möglichst kostengünstig herzustellen, und darüber hinaus sehr robust auszubilden. Dadurch, dass beim Stand der Technik zwei Wasserkreisläufe vorgesehen sind, ist die Vorrichtung zum einen störanfälliger und zum anderen aber auch teurer.
US 2006 283808 A1 betrifft die automatische Abgabe von Elektrolyt in einen Swimmingpool.

US 4,767,511 A betrifft die Chlorierung von Wasser in einem Swimmingpool. Das System umfasst einen Sensor, mit dem Redoxpotential und pH-Wert im Pool überwacht werden. Sinkt das Redoxpotential unter einen bestimmten Wert, weil der Chlorgehalt zu niedrig ist, wird in einem separaten Behälter elektrochemisch aus wässriger Kochsalzlösung Chlor hergestellt, in Wasser eingeleitet und dieses dem Pool-wasser zugesetzt. Steigt der pH-Wert wird aus einem anderen Behälter Säure zugeführt. Die Schrift offenbart ein übliches System zur Abgabe von chlorhaltigem Wasser an eine zu entkeimende Menge an Wasser, wobei der Sensor die Aufgabe hat, die Anforderung von chloriertem Wasser zu regeln. Wie aus der Zeichnung zu erkennen ist, befindet sich der ORP-Sensor im Rezirkulierungsrohr und damit nah an der Elektrolysezelle. Tatsache ist, dass die Schrift überhaupt keinen eigentlichen "Vorratsbehälter" zur Aufnahme des entkeimten Wassers besitzt. Der Vorratsbehälter ist nämlich der Swimming Pool selbst, denn dort soll die Konzentration an Chlor konstant gehalten werden.
US 2002/0070107 A1 betrifft ein System zur Entkeimung von Gebrauchswasser vor Ort. Wasser wird über ein Drosselventil und einen Sensor in einen Reaktor gepumpt, in dem durch Ein-bringen von Energie "reaktive Spezies" erzeugt werden Nach der Behandlung strömt das entkeimte Wasser über ein zweites Drosselventil und verschiedene Regler in einen Vorratsbehälter, wo die Entnahme stattfindet. Es ist auch vorgesehen, dass ein Sensor das Redoxpotential misst, jedoch im Reaktor und nicht im Vorratsgefäß. Die mit diesem Sensor gemessenen Werte betreffen auch nicht die erreichte Wasserqualität, sondern haben etwas damit zu tun, ob der Reaktor richtig funktioniert oder nicht. Über die Regelung können Zulauf und Ablauf des Reaktors geschlossen werden, wobei die Regelung über den Sensor erfolgt. Für diesen Sensor ist jedoch nicht beschrieben, dass er das Redoxpotential misst.

DE 2935124 A (US 4,385,973) betrifft eine Vorrichtung, mit deren Hilfe das Wasser eines Swimmingpools in Kreislaufweise gereinigt wird. Dabei wird auf der Zu-laufseite Wasser in den Reaktor zur anodischen Oxidation geleitet. Das gereinigte Wasser strömt über verschiedene Sensoren, dabei auch einen ORP Sensor zurück in den Swimmingpool. Wird ein Grenzwert überschritten, beispielsweise am Sensor 8, re-gelt der Controller die Spannung im Reaktor auf das benötigte Maß zurück, damit nicht zu viel Chlor entsteht. Für diese Schrift gilt das gleiche wie für US 4,767,511 A: Infolge einer Kreislauffahrweise fehlt es an einem eigentlichen Vorratsbehälter, aus dem das behandelte Wasser zugeführt wird. Der Vorratsbehälter ist auch hier der Swimming Pool selbst. Gerade diese Schrift zeigt auch wieder sehr schön das Problem auf: der Sensor befindet sich nämlich wie üblich wieder nahe an der Elektrolysezelle.
DE 29709241 U betrifft eine Hauswasserdesinfektionsanlage, bei der über eine Elektrolysezelle Chlor abgegeben wird. Die Schrift sieht keine Regelung vor.
Die der Erfindung zugrunde liegende Aufgabe besteht demzufolge darin, eine Vorrichtung zu Wasserentkeimung durch anodische Oxidation bereitzustellen, die in ihrem Aufbau mit einem einzigen Wasserkreislauf wesentlich einfacher und kostengünstiger hergestellt werden kann als beim Stand der Technik. Das heißt, die Vorrichtung soll mit lediglich einem einzigen Wasserkreislauf auskommen, der sowohl den Reaktor zur anodischen Reaktion als auch den Redoxsensor umfasst.
Eine Vorrichtung der eingangs genannten Art, die mit einem einzigen Wasserkreislauf auskommt, die aber dennoch in der Lage ist, entkeimtes Trinkwasser in ausreichender Qualität und Menge zur Verfügung zu stellen, umfassend die folgenden Bauteile:
(i) einen Vorratsbehälter (10) zur Aufnahme des entkeimten Wassers;
(ii) eine Zuführleitung (15), die von dem zu entkeimenden Wasser in den Vorratsbehälter (10) führt;
(iii) einen Reaktor (4) zur anodischen Oxidation des Wassers,
(iv) einen Redoxsensor (5) zur Messung des Redoxpotentials, sowie
(v) eine Einrichtung (20) zur diskontinuierlichen Abgabe des Wassers, die sich am Auslauf der Zuführleitung (15) befindet
dadurch gekennzeichnet, dass
(a) der Reaktor (4) in der Zuführleitung (15) angeordnet ist,
(b) sich der Redoxsensor (5) im Vorratsbehälter (10) befindet, und
(c) die Wasserzufuhr von der Zuführleitung (15) in den Vorratsbehälter (10) diskontinuierlich erfolgt.

Wie bereits an anderer Stelle ausgeführt, ist das Redoxpotenzial ein sehr schwaches und damit auch störanfälliges Signal. Da der Redoxsensor durch die Zuführleitung und durch das in den Behälter einlaufende Wasser in elektrischer Verbindung auf dem Reaktor steht, wird durch die an dem Reaktor anliegende Spannung das Messsignal des Redoxsensors derart verfälscht, dass es nicht geeignet ist, als Wert im Hinblick auf eine Aussage über die Wasserqualität und Wassergüte zu fungieren. Insofern ist nach der Erfindung vorgesehen, dass die Wasserzufuhr von der Zuführleitung in den Vorratsbehälter diskontinuierlich ausgebildet ist, sodass keine elektrische Verbindung zwischen dem Redoxsensor einerseits, der sich in dem Vorratsbehälter befindet, und dem Reaktor zur anodischen Oxidation andererseits besteht, das heißt, es besteht keine elektrische Verbindung zwischen Regel- und Lastkreis. Der Regelkreis umfasst die Sensoren, insbesondere den Redoxsensor; der Lastkreis umfasst den Oxidationsreaktor.

Zur diskontinuierlichen Zufuhr des Wassers in den Vorratsbehälter ist insbesondere eine entsprechende Einrichtung vorgesehen, die beispielsweise als Rohr ausgebildet sein kann, wobei das Rohr eine Mehrzahl von Öffnungen aufweist, durch die das Wasser mit diskontinuierlichem Strahl oder Tropfen in den Vorratsbehälter abgegeben wird. Denkbar ist in diesem Zusammenhang ebenfalls, die Einrichtung als eine einen Wasserstrahl unterbrechende Scheibe oder einen Finger auszubilden, der unter dem Wasserstrahl mit einer entsprechenden Geschwindigkeit rotiert.

Nach einem weiteren Merkmal der Erfindung ist vorgesehen, dass die Vorrichtung eine Regelung umfasst, wobei durch die Regelung die an dem Reaktor anliegende Spannung in Abhängigkeit von der Größe des Redoxpotenzials geregelt wird. Im Einzelnen steht hierbei die Regelung mit einer Pumpe in der Zuführleitung in Verbindung. Das heißt, dass in Abhängigkeit des gemessenen Redoxpotenzials, des Leitwertes des Wassers und der bakteriellen Verschmutzung die an dem Reaktor anliegende Spannung im Verhältnis zu der durch die Pumpe geförderten Wassermenge geregelt wird. Um zu verhindern, dass der Vorratsbehälter überläuft oder eine bestimmte Menge an zu bevorratendem Wasser unterschritten wird, ist mindestens ein Niveausensor im Vorratsbehälter angeordnet.

Darüber hinaus weist die Zuführleitung einen Durchflussmesser auf, der ebenfalls mit der Regelung in Verbindung steht.

Anhand der Zeichnungen wird die Erfindung nachstehend beispielhaft näher erläutert.
- Fig. 1: zeigt das Schaubild in der Vorrichtung zur Wasserentkeimung;
- Fig. 1a: zeigt die Einrichtung zur Erzeugung eines diskontinuierlichen Wasserstrahls;
- Fig. 1b: zeigt schematisch einen rotierenden Finger zur Unterbrechung des Wasserstrahls;
- Fig. 2: zeigt die Regelung.

Gegenstand der Erfindung ist eine Vorrichtung zur Wasserentkeimung, wobei eine solche Vorrichtung insbesondere in Entwicklungsländern eingesetzt werden soll. Dort kann sie als transportable Anlage zur Trinkwasseraufbereitung benutzt werden. Für die Vorrichtung ist eine Stromversorgung, vorteilhaft ein PV-Generator 1, vorgesehen, der durch die Regelung 2 sowohl die Pumpe 3 als auch den anodischen Oxidationsreaktor 4 mit Strom versorgt. Zwischen dem anodischen Oxidationsreaktor und der Regelung ist hierbei ein DC/DC-Wandler 6 zugeordnet. Der Redoxsensor 5 steht durch eine Messleitung 7 mit der Regelung 2 in Verbindung. Die beiden in dem Vorratsbehälter 10 angeordneten Niveauschalter 11 und 12 sind mit der Regelung durch weitere Messleitungen 13 verbunden, wobei die Regelung mit der Pumpe durch eine Leitung 14 in Verbindung steht.

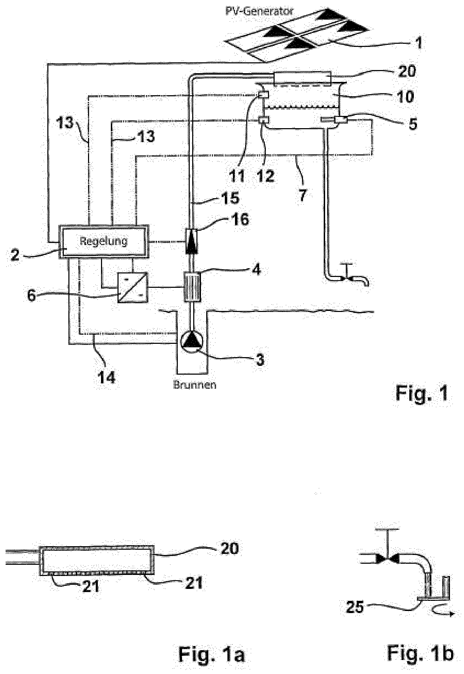

Die mit 15 bezeichnete Wasserleitung, in der auch der Durchflussmesser 16 angeordnet ist, stellt die Verbindung zwischen der Pumpe 3, dem anodischen Oxidationsreaktor 4, dem Durchflussmesser 16 sowie dem Vorratsbehälter 10 dar. Wie bereits ausgeführt, befindet sich der Redoxsensor 5 in dem Vorratsbehälter 10 und misst dort das Redoxpotenzial als Spannung. Der Messwert, d. h. das Redoxpotenzial, ist selbst sehr schwach, sodass Störungen unmittelbar zu einer Verfälschung des Messwertes derart führen, dass dieser nicht mehr für eine Aussage hinsichtlich der Wasserqualität taugt. In diesem Zusammenhang ist vorgesehen, dass die Wasserleitung 15 an ihrem Ende oberhalb des Vorratsbehälters 10 eine Einrichtung 20 zur diskontinuierlichen Wasserabgabe aufweist. Diese Einrichtung zur diskontinuierlichen Wasserabgabe kann gemäß Fig. 1a ein Rohrstück oder Zylinder sein, der mit einer Mehrzahl an Öffnungen 21 versehen ist, um einen tröpfchenförmigen oder zumindest einen diskontinuierlichen Auslass des Wassers in den Vorratsbehälter 10 zu ermöglichen. Gemäß Figur 1b ist ein rotierender Finger 25 unter einem Wasserauslauf vorgesehen, der den Wasserstrahl kontinuierlich unterbricht. Würde ein kontinuierlicher Wasserstrom von der Wasserleitung 15 in den Vorratsbehälter 10 gelangen, so wäre eine elektrische Verbindung zwischen dem Redoxsensor im Vorratsbehälter und dem anodischen Oxidationsreaktor durch den Wasserstrahl vorhanden. Dies würde bedeuten, dass durch die durch die Spannung und den Strom im Oxidationsreaktor verursachten Störungen durch das Wasser auf den Redoxsensor im Vorratsbehälter übertragen werden. Durch eine Zerlegung des Wasserstrahls in Teilstrahlen oder eine ständige kurzzeitige Unterbrechung des Strahls, also eine diskontinuierliche Zuführung des Wassers in den Vorratsbehälter, besteht somit keine direkte Verbindung mehr zwischen Redoxsensor einerseits und Oxidationsreaktor andererseits. Die Störungen auf den Redoxsensor können insofern komplett eliminiert werden, wobei insbesondere keine zusätzlichen Kosten im Hinblick auf einen etwaigen Einsatz von besonderen Schaltungen zur Unterdrückung der Störungen erforderlich sind.

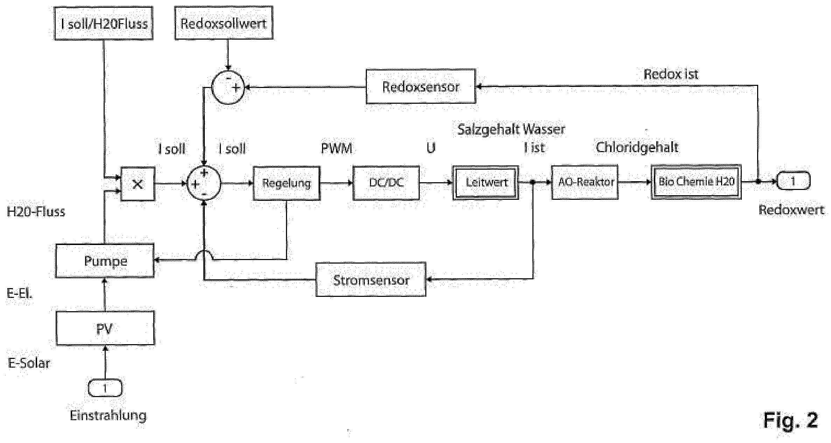

Die in Fig. 2 gezeigte Regelung verhält sich wie folgt:
Ist die Einstrahlung auf die PV-Anlage groß genug, ist genügend Wasser zur Entkeimung vorhanden und der Vorratsbehälter 10 nicht voll, so schaltet die Regelung sowohl den DC/DC-Wandler 6 als auch die Pumpe ein. In Abhängigkeit des Wasserflusses wird ein Strom-Sollwert (I_{Soll}) durch den anodischen Oxidationsreaktor vorgegeben. Dadurch wird von der Regelung ein dementsprechendes PWM-Signal generiert, wodurch eine vom DC/DC-Wandler generierte Spannung an die Platten des anodischen Oxidationsreaktors angelegt wird, und sich ein vom Leitwert des Wasser abhängiger Strom Iᵢₛₜ einstellt. Durch den Strom im anodischen Oxidationsreaktor wird freies Chlor gebildet, welches mit den im Wasser vorhandenen Stoffen (Bakterien, Staub usw.) reagiert und über das Redoxpotenzial gemessen wird. Dieser Strom wird mit dem vorgegebenen Redoxsollwert verglichen und verstärkt oder vermindert den vorgegebenen Stromsollwert (I_{Soll}). Durch einen Stromsensor wird der Strom (iist) ständig mit dem Stromsollwert (I_{Soll}) verglichen und gegebenenfalls angepasst. Die Wirkung der Bakterien auf das Systems ist seitens der Regelung als Störgröße anzusehen. Über seinen Einfluss liegen keine direkten Messdaten vor, jedoch spiegelt sich der Wert im Redoxpotenzial wider. Ist die Anzahl der Bakterienkolonien groß, wird auch eine größere Menge an oxidierenden Substanzen benötigt bzw. verbraucht, was ein Sinken der Redoxspannung zur Folge hat. Der wirksame Eintrag an Bakterien kann mit einer Zeitkonstante für mehrere Stunden angenommen werden. Das Redoxpotenzial ist somit die eigentliche Regelgröße des Systems.

## Patentansprüche

1. Vorrichtung zur Wasserentkeimung, umfassend die folgenden Bauteile:
(i) einen Vorratsbehälter (10) zur Aufnahme des entkeimten Wassers;
(ii) eine Zuführleitung (15), die von dem zu entkeimenden Wasser in den Vorratsbehälter (10) führt;
(iii) einen Reaktor (4) zur anodischen Oxidation des Wassers,
(iv) einen Redoxsensor (5) zur Messung des Redoxpotentials, sowie
(v) eine Einrichtung (20) zur diskontinuierlichen Abgabe des Wassers von der Zuführleitung in den Vorratsbehälter, die sich am Auslauf der Zuführleitung (15) befindet
**dadurch gekennzeichnet, dass**
(a) der Reaktor (4) in der Zuführleitung (15) angeordnet ist,
(b) sich der Redoxsensor (5) im Vorratsbehälter (10) befindet, und

2. Vorrichtung nach Anspruch 1, wobei die Einrichtung (20) als Rohr mit einer Mehrzahl von Öffnungen (21) ausgebildet ist.

3. Vorrichtung nach Anspruch 1, wobei die Einrichtung (20) als ein den Wasserstrahl unterbrechender Finger (25) ausgebildet ist.

4. Vorrichtung nach Anspruch 1, wobei die Vorrichtung eine Regelung (2) umfasst, mit der die an dem Reaktor (4) anliegende Spannung in Abhängigkeit von der Größe des Redoxpotentials, des Leitwertes des anliegenden Wasserflusses und dem Grad der bakteriellen Verschmutzung geregelt wird.

5. Vorrichtung nach Anspruch 1, wobei die Regelung mit einer Pumpe (3) in der Zuführleitung (15) in Verbindung steht.

6. Vorrichtung nach Anspruch 1, wobei die Regelung mit mindestens einem Niveausensor (11, 12) im Vorratsbehälter (10) in Verbindung steht.

7. Vorrichtung nach Anspruch 1, wobei die Zuführleitung (15) einen Durchflussmesser (16) aufweist, der mit der Regelung in Verbindung steht.

8. Verfahren zur Wasserentkeimung, bei dem man das zu entkeimende Wasser in einer Vorrichtung gemäß Anspruch 1 diskontinuierlich über eine Zuführleitung, in der das Wasser mit Hilfe eines darin angeordneten Reaktors einer anodischen Oxidation unterworfen wird, in einen Vorratsbehälter führt und in diesem mit Hilfe eines darin angeordneten Redoxsensors das Redoxpotential als Maßstab für die Wasserqualität bestimmt.

9. Verfahren nach Anspruch 8, bei dem man die anodische Oxidation mit Hilfe einer Elektrolysezelle durchführt.

10. Verfahren nach Anspruch 8, bei dem man die elektrischen Bauteile mit Hilfe einer Photovoltaik-Anlage betreibt.

11. Verfahren nach Anspruch 8, bei dem man den Regelkreis (Redoxsensor) vom Lastkreis (Oxidationsreaktor) elektrisch trennt.

12. Verfahren nach Anspruch 8, bei dem man die am Reaktor anliegende Spannung in Abhängigkeit vom Redoxpotential regelt.

13. Verfahren nach Anspruch 8, bei dem man das Über- oder Unterschreiten einer vorgegebenen Wassermenge im Vorratsbehälter mit Hilfe von mindestens einem Niveausensor verhindert.

14. Verfahren nach Anspruch 8, bei dem man die Entkeimung in einem einzigen Wasserkreislauf vornimmt.

## Claims

1. A device for water purification, comprising the following components:
(i) a reservoir (10) for receiving the to be purified water,
(ii) a feeding pipe (15) which runs from the to be purified water into the reservoir (10),
(iii) a reactor (4) for the anodic oxidation of water,
(iv) a redox sensor (5) for measuring the redox potential, and
(v) an equipment (20) for discontinuously delivering the water from the feeding pipe into the reservoir, which is located at the outlet of the feeding pipe,
**characterized in that**,
(a) the reactor (4) is arranged in the feeding pipe (15), and
(b) the redox sensor (5) is located in the reservoir (10).

2. The device according to claim 1, wherein the equipment (20) is constructed as pipe with numbers of openings (21).

3. The device according to claim 1, wherein the equipment (20) is constructed as a waterflow interrupting finger (25).

4. The device according to claim 1, wherein the device comprises a controller (2), with which the voltage applied on the reactor (4) is controlled in dependence of the value of the redox potential, the conductance of the water flow and the level of the bacterial contamination.

5. The device according to claim 1, wherein the controller is in contact with a pump (3) in the feeding pipe (15).

6. The device according to claim 1, wherein the controller is in contact with at least one level sensor (11, 12) in the reservoir (10).

7. The device according to claim 1, wherein the feeding pipe (15) is equipped with a flow meter (16), which is in contact with the controller.

8. A method to purify water, wherein in a device according to claim 1 the to be purified water is discontinuously delivered through a feeding pipe, in which with the help of a reactor arranged therein the water is subjected to anodic oxidation, into a reservoir and in the reservoir with the help of a redox sensor located therein the redox potential as an indicator of the water quality is determined.

9. The method according to claim 8, wherein the anodic oxidation is conducted by the means of an electrolytic cell.

10. The method according to claim 8, wherein the electric components operate by the means of a photovoltaic facility.

11. The method according to claim 8, wherein the control circuit (redox sensor) is electrically isolated from the load circuit (oxidation reactor).

12. The method according to claim 8, wherein the voltage applied to the reactor is controlled in dependence of the redox potential.

13. The method according to claim 8, wherein the water amount in the reservoir is avoided to be above or below the predetermined value by the means of at least one level sensor.

14. The method according to claim 8, wherein the purification is conducted in a single water circulation.

## Revendications

1. Dispositif de stérilisation de l'eau comprenant les composants suivants :
(i) un réservoir (10) destiné à recevoir l'eau stérilisée ;
(ii) une conduite d'alimentation (15) allant de l'eau à stériliser au réservoir (10) ;
(iii) un réacteur (4) d'oxydation anodique de l'eau,
(iv) un capteur Redox (5) destiné à mesurer le potentiel Redox, ainsi que
(v) un moyen (20) d'évacuation discontinue de l'eau de la conduite d'alimentation jusque dans le réservoir situé à la sortie de la conduite d'alimentation (15),
**caractérisé en ce que**
(a) le réacteur (4) est disposé dans la conduite d'alimentation (15),
(b) le capteur Redox (5) est situé dans le réservoir (10).

2. Dispositif selon la revendication 1, le moyen (20) étant conçu comme un tube comportant une pluralité d'orifices (21).

3. Dispositif selon la revendication 1, le moyen (20) étant conçu comme un doigt d'interruption de jet d'eau (25).

4. Dispositif selon la revendication 1, le dispositif comprenant un système de régulation (2) destiné à réguler la tension appliquée au réacteur (4) en fonction de l'amplitude du potentiel Redox, de la conductivité du flux d'eau appliqué et du degré de contamination bactérienne.

5. Dispositif selon la revendication 1, le système de régulation étant en communication avec une pompe (3) située dans la conduite d'alimentation (15).

6. Dispositif selon la revendication 1, le système de régulation étant en communication avec au moins un capteur de niveau (11, 12) situé dans le réservoir (10).

7. Dispositif selon la revendication 1, la conduite d'alimentation (15) comportant un débitmètre (16) en communication avec le système de régulation.

8. Procédé de stérilisation de l'eau, dans lequel, dans un dispositif selon la revendication 1, l'eau à stériliser est amenée de manière discontinue jusque dans un réservoir par le biais d'une conduite d'alimentation dans laquelle l'eau est soumise, au moyen d'un réacteur placé à l'intérieur, à une oxydation anodique et, dans ledit réservoir, le potentiel Redox est déterminé comme mesure de la qualité de l'eau à l'aide d'un capteur Redox placé dans ledit réservoir.

9. Procédé selon la revendication 8, dans lequel l'oxydation anodique est effectuée à l'aide d'une cellule électrolytique.

10. Procédé selon la revendication 8, dans lequel les composants électriques fonctionnent au moyen d'un système photovoltaïque.

11. Procédé selon la revendication 8, dans lequel le circuit de régulation (capteur Redox) est séparé électriquement du circuit de charge (réacteur d'oxydation).

12. Procédé selon la revendication 8, dans lequel la tension appliquée au réacteur est régulée en fonction du potentiel Redox.

13. Procédé selon la revendication 8, dans lequel le dépassement par le haut ou par le bas d'une quantité prédéterminée d'eau dans le réservoir est empêché à l'ide d'au moins un capteur de niveau.

14. Procédé selon la revendication 8, dans lequel la stérilisation est réalisée en un seul cycle d'eau.
